# EUROPEAN PATENT SPECIFICATION

(11) **EP 2 354 775 B1**
(45) Date of publication and mention of the grant of the patent: **08.08.2018**
(21) Application number: 11153907.8
(22) Date of filing: 09.02.2011
(51) Int. Cl.: G01K 17/06, G01K 17/08

(54) **A control device for radiators**
Heizkörpersteuervorrichtung
Dispositif de contrôle pour radiateurs

(30) Priority: 10.02.2010 IT MI20100194
(43) Date of publication of application: 10.08.2011
(73) Proprietor: Benincasa, Giuseppe, 20052 Monza (IT)
(72) Inventor: Benincasa, Giuseppe, 20052 Monza (IT)
(74) Representative: Zanoli, Enrico

(56) References cited:
- DE-C2- 3 050 838
- FR-A1- 2 552 546
- US-A- 3 995 686
- US-A1- 2005 056 799

## Description

The present invention relates to a control device for radiators.

In particular, the present invention concerns a control device suitable for association with heat exchanger elements, such as radiators, convector heaters or the like for a heating system, said radiator comprising a fluid inlet at inlet temperature, a fluid outlet at outlet temperature and at least a heat exchange portion at exchange temperature.

More in detail, the present invention concerns a metering device for distributing the related heating costs, for instance in an apartment block. Additionally, the present invention concerns an economizer for said radiator.

In apartment blocks with central heating systems, the heating costs are currently divided proportionally as a function of the size of each apartment (often calculated as a "millesimal value" of the property).

There are known devices suitable to be attached to radiators to monitor and record their heat consumption. These devices are generally connected to a central position on the radiator with a view at measuring its temperature and obtaining therefrom the energy consumption of the radiator as a whole. Examples can be found in FR 2 552 546 A1 and US 3 995 686 A. Such devices are unreliable and intrinsically inaccurate, however. In fact, they rely on the thermal inertia of the material of which the radiator is made (generally cast iron), which may lead to reading errors. Moreover, the monitoring of the heat consumption does not take into account the time interval between the starting time and the ending time of the flow through the radiator. Further reading errors can occur in the case of the radiator being painted because painting changes its thermal transmission coefficient in relation to the device setting for said parameter.

Moreover, the known devices are not suitable for use in heating systems comprising condensing boilers because they are only enabled beyond a given temperature, which condensing boilers may never reach in certain atmospheric conditions, meaning that any heat consumption would consequently not be recorded by the device.

In addition to the above, the known devices are not suitable for use on fan coil units, or other similar elements.

To overcome some of these drawbacks, attempts have been made to equip the known devices with a temperature sensor suitable to record the temperature of the room in which the radiator is installed. The reliability of such device is strongly subject to the position of the temperature sensor, however.

The above-mentioned drawbacks and the unreliability of the resulting reading make it impossible to apportion the heating costs as a function of the consumption alone. As a consequence, even when the known devices are used, the heating costs are distributed partially on the basis of the readings given by the devices and partially according to the size of the apartment (or its millesimal value).

Moreover, the known devices are incapable of interacting with the flow inside the radiators so, if the fluid does not flow in it, there will result a heating cost if the temperature of the radiators is more or equal to a fixed temperature. Furthermore, if the temperature setting (established by means of a thermostatic valve, for instance) is higher than the room temperature, there will be a heat consumption even if the apartment is empty.

An object of the present invention is thus to provide a service device for heating systems that overcomes the above-mentioned drawbacks of the known art.

In particular, an object of the present invention is to provide a control device for radiators or the like with a metering device capable of providing an accurate and reliable reading of the effective energy consumption and/or the energy transfer of the radiator.

More particularly, another object of the present invention is to provide a control device, for radiators or the like, which is able to calculate the actual energy consumption and/or the energy transfer only when a flow of fluid is detected in the radiator. Furthermore, another object of the present invention is to provide a control device capable of providing an accurate and reliable reading of the actual energy consumption and/or the energy transfer even in the event of modifications being made to the radiator.

Another object of the present invention is to provide a control device for radiators or the like with a metering device that is easy to install and aesthetically pleasing.

In addition, a further object of the present invention is to provide a control device for radiators or the like with an economising function, in addition to the energy consumption an/or energy transfer meter function, that enables the waste of energy to be avoided or minimized.

The above objects are achieved by a control device for radiators, convector heaters or the like for a heating system, wherein said radiator comprises a fluid inlet at inlet temperature, a fluid outlet at outlet temperature and at least a heat exchange portion at exchange temperature, said control device comprising a metering device comprising: first detection means to detect the fluid flow through said flow inlet, said first detection means being associated to first measuring means of the time interval between the starting time and the ending time of said flow through said flow inlet; second detection means to detect said inlet temperature and said outlet temperature and/or said exchange temperature, said second detection means being associated to second measuring means using at least one of said detected temperature to calculate temperature difference of said radiator; means for calculate the energy consumption of said radiator, said means for calculation being associated to said first and second measuring means.

Moreover, the objects above are further achieved by a method for controlling radiators, convector heaters or the like for a heating system, wherein said radiator comprises a fluid inlet at inlet temperature, a fluid outlet at outlet temperature and at least a heat exchange portion at exchange temperature, said method being characterized by comprising the following steps:
- detection of the fluid flow through said flow inlet and measurement of the time interval between the starting time and the ending time of said flow through said flow inlet;
- detection of said inlet temperature and said outlet temperature and/or said exchange temperature and calculation of the temperature difference of said radiator, by using at least one of said detected temperatures;
- calculation of the energy consumption of said radiator, by using at least said time interval and said temperature difference.

Further characteristics and advantages of the present invention will appear more clearly from the following description given as a non-limiting example of a preferred but not exclusive embodiment of a control device for radiators or the like, as illustrated in the attached drawings, wherein:
- figure 1 is a schematic view of the control device according to a first possible embodiment in a first condition;
- figure 2 is a schematic view of the control device in figure 1, in another condition;
- figure 3 is an enlarged schematic view of a detail of figure 1;
- figure 4 is an enlarged schematic view of a detail in figure 1, in another condition;
- figures 5 to 8 show an enlarged schematic view of a detail in figure 1 in a sequence of conditions;
- figures 9 and 10 show a schematic view of a control device according to a first embodiment in two different conditions;
- figure 11 is a schematic view of the control device according to a second possible embodiment in a fist condition when it is connected to a radiator;
- figure 12 is a schematic view of the control device according to a second possible embodiment in another condition when it is connected to a radiator.

With reference to the attached figures, the numerals 10 and 11 have been respectively used to indicate a first and a second embodiment of the control device. This control device 10, 11, for either the embodiments, is suitable for associating with radiators 1, convectors heaters or the like, installed in an environment, such as an apartment. The radiator 1 comprises a fluid inlet 2, 211 through which the fluid passes at inlet temperature Tᵢ, a fluid outlet 3, 311 through which the fluid passes at outlet temperature Tₒ and at least a heat exchange portion 8a, 8b, 8c, 8d, 8e warmed by the fluid at exchange temperature Tₑ. Tᵢ is greater than Tₒ as a result of the heat exchange that takes place between the radiator 1 and the environment. In a similar way, Tₑ could be greater than a comparison temperature, like room temperature or fixed temperature, as a result of the already described heat exchange.

The fluid is hereinafter also indicated as water, although mixtures of water and various kinds of additive may be used. The fluid is heated by a central heating system, preferably serving the whole apartment block (not shown).

The radiator 1 as a whole is illustrated in the attached drawings 11, 12, and comprises an inlet body 4, 41 and an outlet body 5, 51 (or holder). In particular, therefore, there is an inlet section for the hot water (at the temperature Tᵢ) from the central heating system, indicated with the reference numeral 4a, 41a, and an inlet section for delivering the hot water to the radiator 1, indicated with the reference numeral 4b, 41b. The term Fᵢ is used to indicate the flow of incoming water to the radiator 1, inside the inlet body 4, 41. There is also an outlet section for the water at the temperature Tₒ returning to the central heating system, indicated with the reference numeral 5a, 51a and an outlet section for the water at a temperature Tₒ coming from the radiator 1, indicated with the reference numeral 5b, 51b. The term Fᵤ is used to indicate the flow of water from the radiator 1, inside the outlet body 5, 51.The control device 10, in a first embodiment illustrated with the figures from 1 to 10, advantageously comprises a metering device comprising first detection means 12, 112, 13, 113, 18, 118, 22, 122 to detect the fluid flow through said flow inlet 2, 211. These first detection means 12, 112, 13, 113, 18, 118, 22, 122 are, in addition, suitable for recording the presence of a flow of fluid through the inlet 2, 211 and are associated with first measuring means 18, 118, 22, 122 suitable for measuring the time interval, defined as the interval between the starting time and the ending time of the flow through the fluid inlet 2, 211.

The metering device also comprises second detection means to detect the inlet temperature Tᵢ and the outlet temperature Tₒ or to detect exchange temperature Tₑ of at least one of the heat exchange portions 8a, 8b, 8c, 8d, 8e of the radiator 1. These second detection means are suitable for recording the incoming temperature Tᵢ and the outgoing temperature Tₒ and are associated with second measuring means suitable for measuring the temperature difference between the inlet 2, 211 and outlet 3, 311.

The metering device also comprises means for calculating the energy consumption, determining the calories consumption, as a function of the flow rate of a boiler connected to the radiator 1. These calculating means are associated with the first and second measuring means and they use the data recorded and measured by the latter.

The control device preferably comprises control means 6, 61, 7, 711 for controlling the inlet 2, 211 of the radiator 1, designed to open it below a given temperature threshold and to close it above the temperature threshold. The first detection means 12, 112, 13, 113, 18, 118, 22, 122 are associated or connected to the control means 6, 61, 7, 711 to detect the opening of the fluid inlet 2, 211. These control means may, for instance, consist of a thermostatic valve 6, 61 installed, preferably by means of screws, on the inlet body 4, 41 of the radiator 1.

Where a thermostatic valve 6, 61 is provided, the first detection means 12, 112, 13, 113, 18, 118, 22, 122 are suitable for recording the opening of the inlet 2, 211 of the radiator 1.

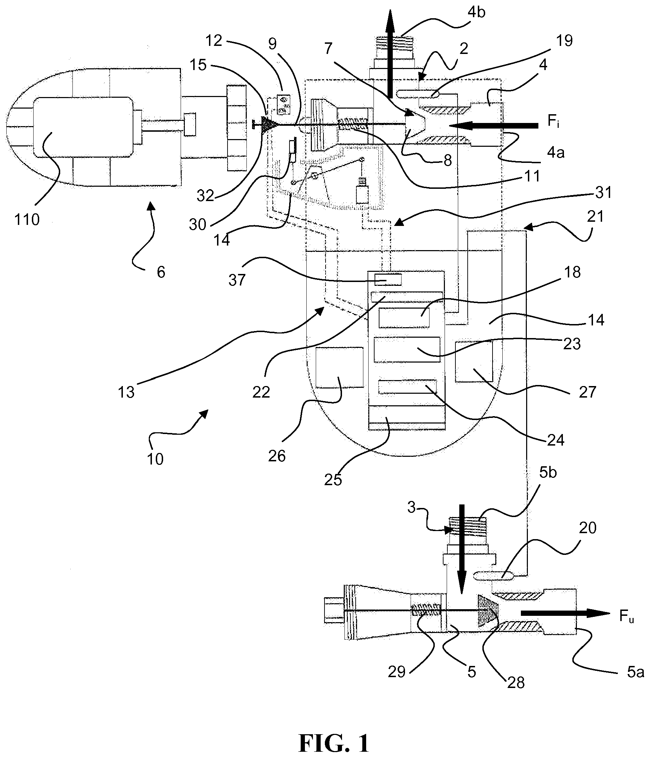

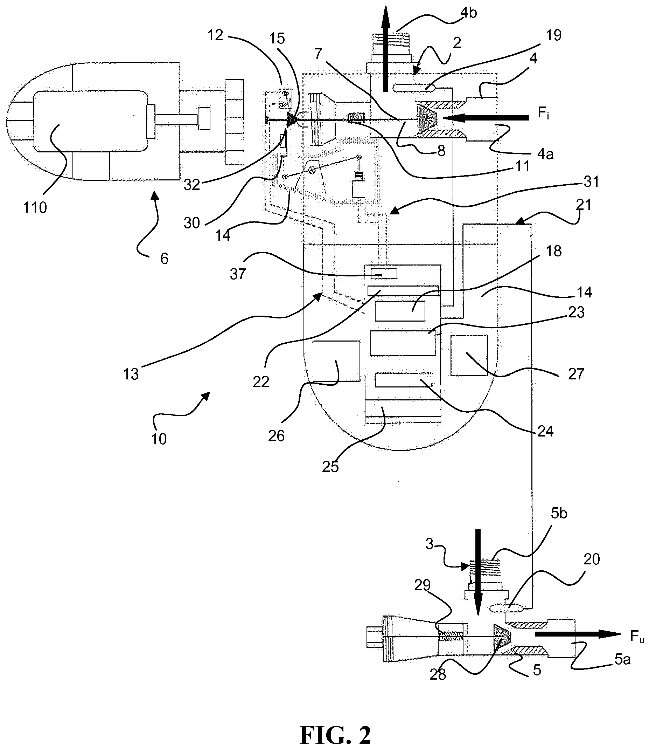

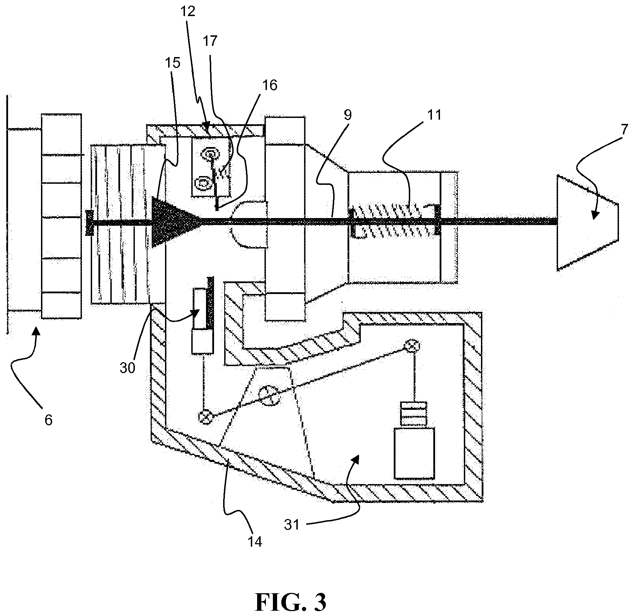

With reference to the example shown in figures 1 and 2, the thermostatic valve 6 is associated with a shutter 7 movable between a closed position and an open position of the fluid inlet 2 of the radiator 1. For example, the shutter 7 may be contained inside the inlet body 4 of the radiator 1. A head 8 on the shutter 7 (numbered only in figures 1 and 3) is designed to interact with a portion of the inlet body 4 to close the cross section for the passage of the fluid. There may also be a stem 9 extending from the head 8 towards the outside of the inlet body 4.

The shutter 7 is associated with a temperature-sensitive element 110 that at least controls its movement to close the inlet 2 of the radiator 1 when the temperature threshold is exceeded. With reference to the attached figures, the temperature-sensitive element 110 commands the closing movement of the shutter 7, while the opening movement of the shutter is achieved by elastic elements 11, contained inside the inlet body 4, for instance, and taking effect when the action of the temperature-sensitive element 110 no longer comes to bear on the shutter 7.

The first detection means comprise a switch 12, preferably a microswitch, associated with a first detection circuit 13.

The switch is advantageously associated with the shutter 7, or with the temperature-sensitive element 110, of the thermostatic valve 6 so as to modify its open/closed state as a function of the open/closed position of the shutter 7.

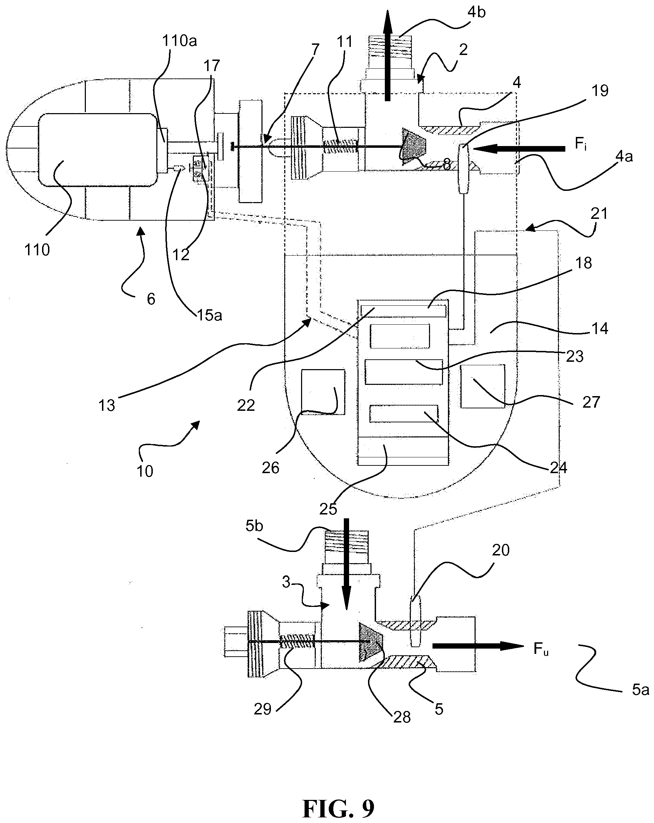

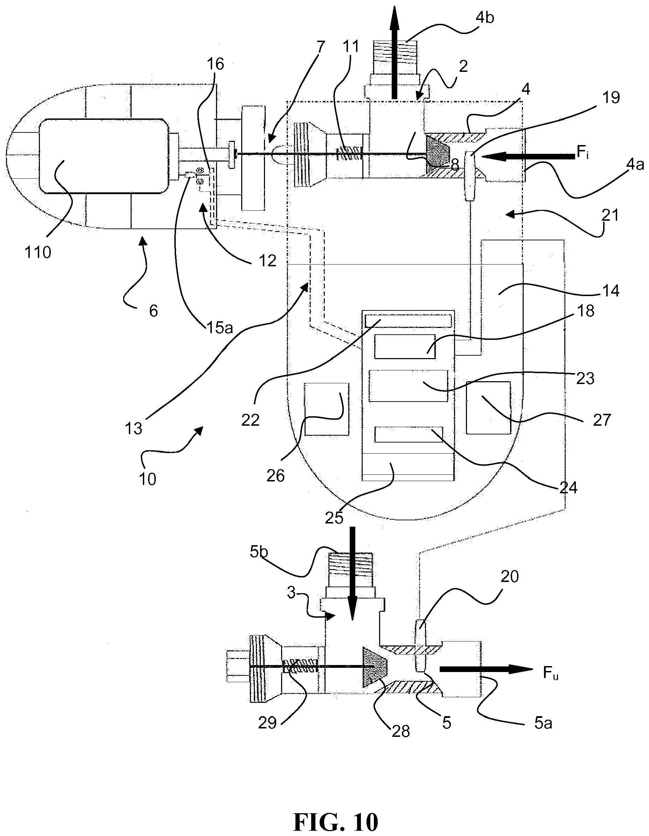

In the example shown in figures 1-3, the switch 12, the first recording circuit 13 and the first detection means are contained inside an outer case 14 of the control device suitable for being installed on the inlet body 4 of the radiator 1, e.g. between the thermostatic valve 6 and said inlet body. Figures 9 and 10 show the switch 12 contained inside the thermostatic valve 6, while the first detection means are contained inside the outer case 14 of the control device and the first recording circuit 13 serves as a connection.

The outer case 14 may extend to cover the inlet body 4.

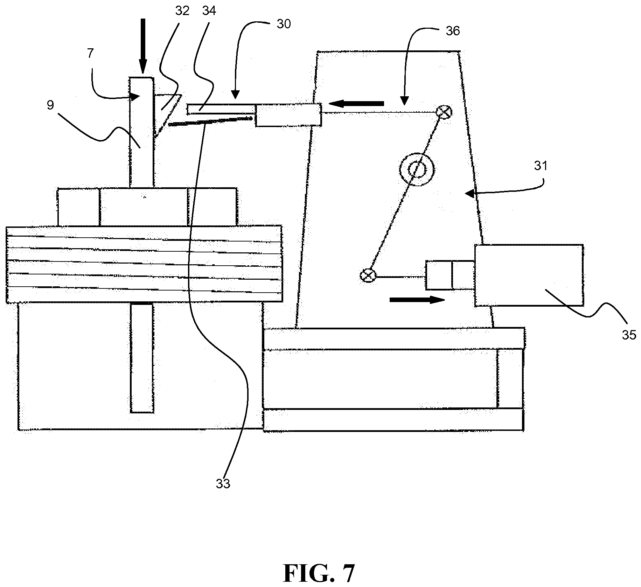

In the examples shown in figures 1-3, the shutter 7 comprises an extension, preferably a sloping plane 15, suitable for changing the state of the switch 12 as a function of the open/closed position of the shutter 7. The switch 12 may comprise, for instance, a moving contact 16 (figure 7) suitable for opening the first recording circuit 13 under the action of the shutter 7 (or of the temperature-sensitive element 110) when the inlet 2 of the radiator 1 closes. Elastic means 17 may be provided to return the mobile contact 16 to the closed position. Alternatively, the first detection circuit 13 may be closed when the inlet 2 of the radiator 1 is closed. The function of the shutter 7 and of the elastic means 17 may also be reversed. Moreover, means other than the sloping plane 15 or the temperature-sensitive element 110 may be provided to modify the open/closed state of the moving contact 16.

With reference to figure 1, the shutter 7 is in the position where the inlet 2 is open and the moving contact 16 is in the position where the first detection circuit 13 is closed. In figure 2, the temperature-sensitive element 110 has expanded, pushing the shutter 7 into the closed position and opening the moving contact 16 by means of the sloping plane 15.

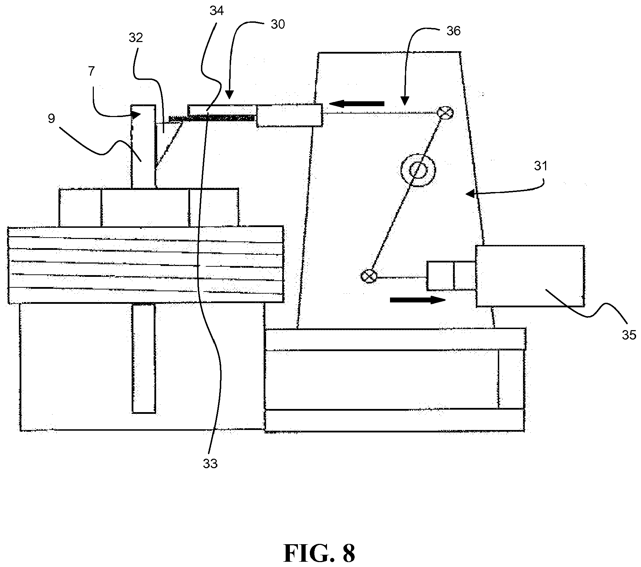

In the example shown in figures 8 and 9, the switch 12 is associated with the temperature-sensitive element 110, or with a thrust portion 110a, by means of an appendage 15a that is arranged so as to change the open/closed state of the switch 12 as a function of the condition of the temperature-sensitive element 110. In particular, figure 9 shows the appendage 15a detached from the switch 12, which remains closed under the action of the elastic means 17. In figure 10, the temperature-sensitive element 110 has expanded, pushing the shutter 7 closed and pushing the moving contact 16 open, opposing the action of the elastic means 17.

In addition to the above, a clock is associated with the first detection circuit 13 to establish the instant when the flow starts and the instant when the flow stops. There is also a counter constituting the first measuring means suitable for measuring the time interval, i.e. the time interval between the instant when the flow starts and the instant when it stops. In the figures, the rectangle 18 indicates the clock and the counter.

An example of second detection means suitable for recording the incoming temperature and the outgoing temperature is shown in the attached figures, wherein a thermal probe of inlet 19 records the incoming temperature Tᵢ, and a thermal probe of outlet 20 records the outgoing temperature Tₒ.

The thermal probe of inlet 19 is associated with the inlet 2 of the radiator 1. The thermal probe of outlet 20 is associated with the outlet 3 of the radiator 1.

The thermal probe of inlet 19 and the thermal probe of outlet 20 are associated with a second detection circuit 21 associated with second measuring means 22.

The second measuring means 22 are suitable for measuring the temperature difference between the inlet and the outlet. In the examples shown, this is done by components on an electronic board 22 in the control device 10.

According to the examples shown, the thermal probe of inlet 19 and/or the thermal probe of outlet 20 can be inserted in a duct in the radiator 1, e.g. the inlet duct 4 and the outlet duct 5, in contact with the fluid. Alternatively, the thermal probe of inlet 19 and/or the thermal probe of outlet 20 can be placed in contact with a duct in the radiator 1, e.g. the inlet duct 4 and the outlet duct 5. Figures 1-3 and 8, 9 show two different positions of the thermal probes directly in contact with the fluid.

With reference to figures 1-3, the control device 10 may also comprise a display 23 and an input 24 for setting the capacity of the central heating system, for instance, or other parameters, or for resetting the device after any error situations.

The numeral 25 is used to indicate a radio module suitable for sending the data relating to the flow intervals and the temperature differences to a control unit (not shown). The data may be transferred continuously or discretely, providing for the electronic board 22 to record the data over a given period.

The numerals 26 and 27 indicate two cavities for batteries, which may also have differentiated functions as described below.

Finally, the numeral 28 indicates a further shutter, preferably associated with elastic means 29, installed on the outlet body 5.

The operation of the control device 10 with a metering device is described below.

The first detection means and measuring means record the time interval during which the inlet 2 of the radiator 1 remains open. With reference to the examples shown, the switch 12 is closed when the inlet 2 is open. The clock and the counter identify the instant when the first detection circuit 13 is closed and opened, and measure the time interval corresponding to the effective opening of the inlet 2 of the radiator 1.

The two sensors record the incoming (inlet) Tᵢ and outgoing (outlet) Tₒ temperatures, particularly during the time interval corresponding to the effective opening of the inlet 2, and the second measuring means calculate the difference.

Having established the flow rate of the boiler (possibly taking the adjustment of the outlet body into account) and taken any corrective factors into account, the data relating to the temperature differences between the inlet and the outlet, and to the interval during which the inlet 2 is actually open, enable the effective energy consumption to be obtained in terms of the heat absorbed by the environment or in calories consumption.

With reference to figure 1, the control device 10 with a metering device measures the time interval during which the inlet 2 remains open and the temperature difference between the inlet and the outlet. When the temperature threshold is reached in the environment, the temperature-sensitive element 110 expands and closes the inlet 2, displacing the shutter 7 (figure 2).

The movement of the shutter 7 prompts the opening of the first detection circuit 13, which stops the opening time counter. The recording of the temperature difference may also be suspended.

As in the device shown in figures 1-8, the control device 10 according to the present invention may, in addition, comprise an economizer comprising means to prevent the opening of the inlet 2 during certain time periods.

The economizer is designed to take effect on a shutter operating the inlet 2. In particular, the economiser is suitable for acting on the shutter 7 of the thermostatic valve 6.

The control means (to prevent the opening) comprise a cursor 30 movable between a position at rest and a working position, wherein it prevents the shutter 7 from moving from the closed position to the open position. The cursor 30 is associated with a control circuit 31, with a user-adjustable input, e.g. the input indicated by the numeral 24.

When in the working position, the cursor 30 is preferably designed to enable the passage of the shutter 7 from the open position to the closed position.

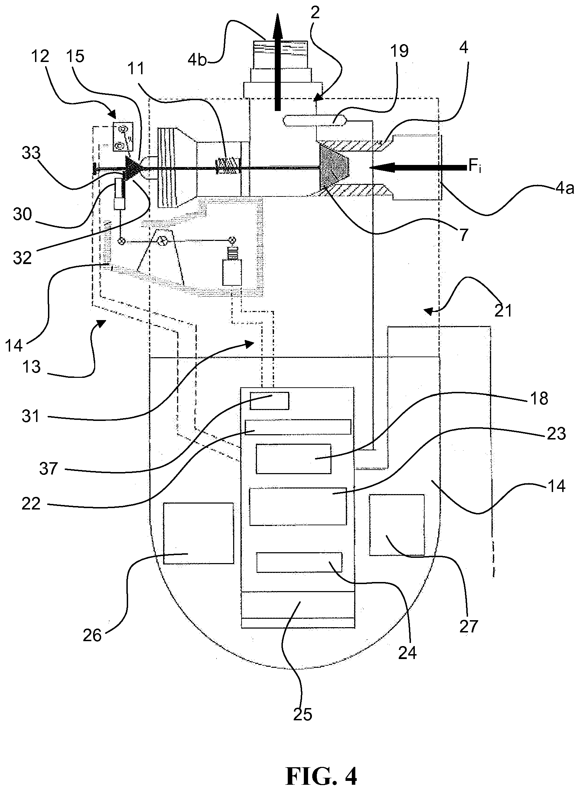

For instance, the shutter 7 may comprise an extension, such as a sloping plane 32, suitable for interacting with the cursor 30 in the working position. For example, the cursor 30 may comprise an elastic element 33 deformable by means of the extension 32 on the shutter 7 during the passage of the shutter from the open position to the closed position. The elastic element 33 also constitutes an obstacle to the passage of the shutter from the closed position to the open position (figures 4-8).

For instance, the cursor 30 may comprise the elastic element 33 and a contrasting element 34 designed to prevent the deformation of the elastic element 33 during the phase when the shutter 7 opens (and in the working position of the cursor 30).

The control circuit 31 preferably comprises an actuator 35, e.g. a linear actuator, associated for instance with a lever mechanism 36 for moving the cursor 30 from the position at rest to the working position and vice versa. The actuator 36 may be governed by a relay 37, or the like, associated with the input 24. If there are two batteries, as shown in the figures, one may be used for the actuator and the other for the metering devicve, if any.

There may also be other components in the device, such as the clock/counter 18, the display 23, the radio module 25, and the electronic board 22. The clock/counter and the input enable periods to be scheduled during which the cursor must prevent the opening of the inlet 2.

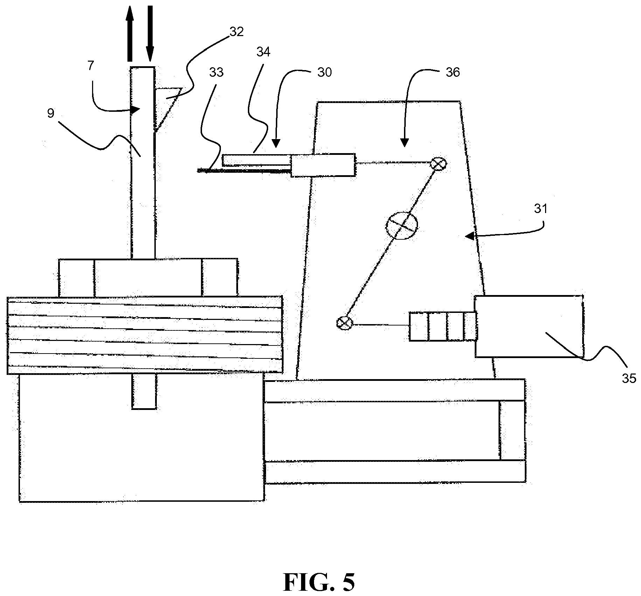

The operation of the economizer is as follows (figures 5-8).

Figure 5 shows a resting position of the cursor 30, wherein the shutter 7 (the stem 9) can move freely in both directions following the action of the temperature-sensitive element 110, and possibly of the elastic means 11.

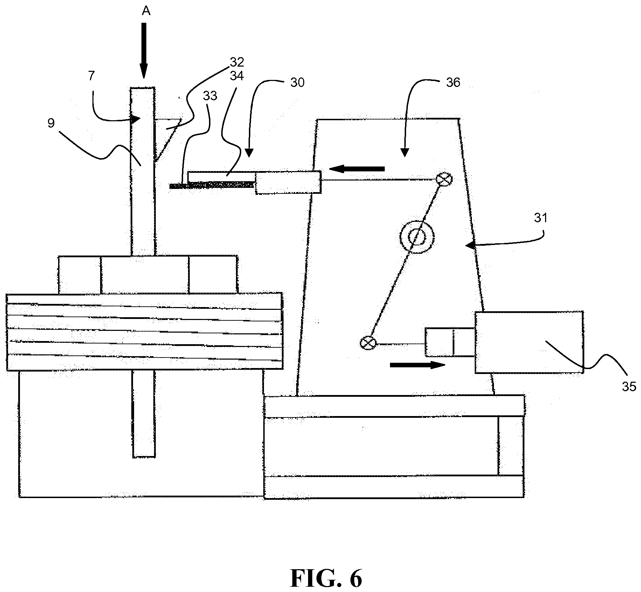

Figure 6 shows a working position of the cursor 30, wherein the shutter 7 (the stem 9) can move to close the inlet 2 (direction A). Figure 7 shows the shutter 7 that has advanced further in the direction A to close the inlet 2. The sloping plane 32 abuts against the cursor 30 and deforms its elastic element 33. In figure 8, corresponding to figure 4, the cursor 30 is in the working position and the shutter 7 is in the closed position. The shutter 7 is prevented from returning by the cursor 30. In fact, the elastic element 33 is undeformable due to the presence of the contrasting element 34.

In other words, when the occupants are absent and no room heating is required, the cursor moves into the working position. If the shutter 7 of the thermostatic valve 6 was already in the closed position, the cursor 30 prevents it from opening. If the shutter 7 of the thermostatic valve 6 was still in the open position, when the temperature threshold is reached, the temperature-sensitive element 110 pushes the shutter 7 into the closed position without encountering any impediment from the cursor 30. The shutter 7 can subsequently open again only after the cursor has returned to its resting position, which depends on the preset heating schedule.

The control device 10 according to the present invention may comprise an outer case 14 suitable for installing on the inlet body 4 of the radiator 1, e.g. between the thermostatic valve 6 and the body of the inlet.

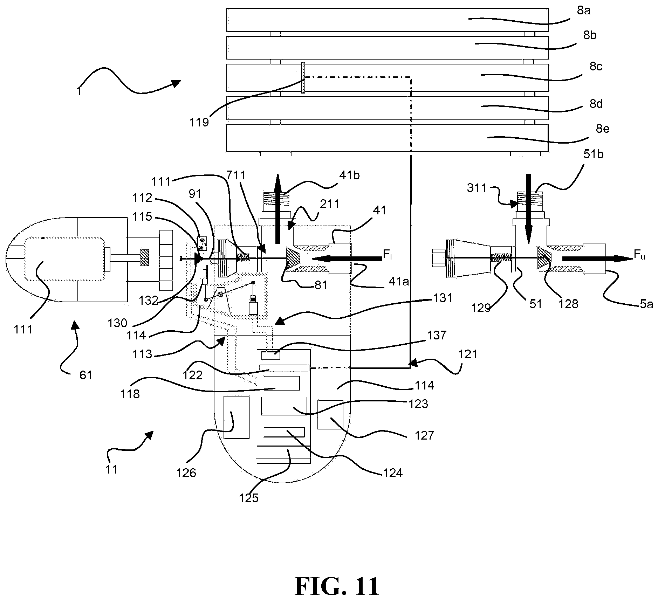

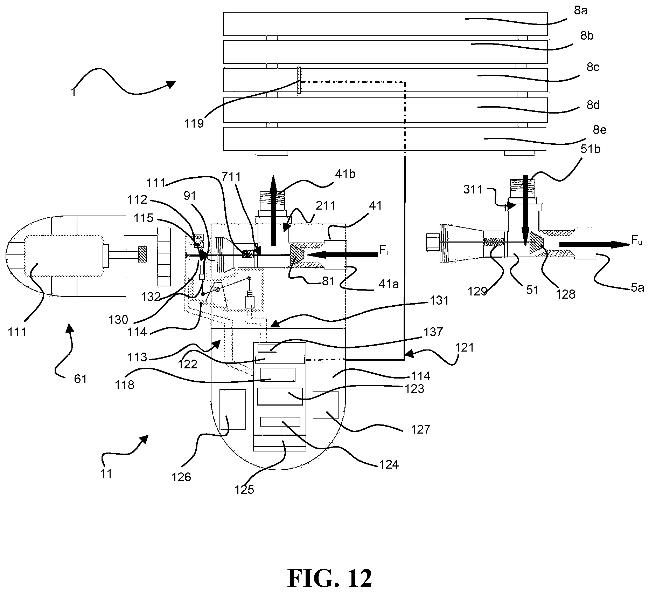

The second embodiment of the control device 11, illustrated in figures 11 and 12, comprises the same technical features of the above described control device, there is only a thermal probe of exchange 119 in a central exchange portion 8c of the radiator 1. No other thermal probe of inlet or of outlet are providing. In this second embodiment the second detection means detect the exchange temperature Tₑ of the heat exchange portions, in particular in the central exchange portion 8c, warmed by the fluid at exchange temperature Tₑ.

The detection normally relates to a central position, exchange portion 8c, on the radiator 1, but can also refer to a different position, like the other exchange portion 8a, 8b, 8d, 8e.

In this second embodiment the second measuring means calculate the temperature difference between the heat exchange portion 8a, 8b, 8c, 8d, 8e, preferably the one of these like the central 8c, and at least a comparison temperature. The comparison temperature is a fixed temperature that the user can set at the installation of the control device 11 on the radiator 1, or it is a subsequently modified temperature. It is also possible to use the room temperature as the comparison temperature.

The means to calculate the energy transfer determine the heat consumed based on at least a parameter of the heating system and/or of the radiator 1, as corrective parameters, and based on the temperature difference between the exchange temperature Tₑ and the comparison temperature in a time interval defined as the interval between the starting time and the ending time of the flow through the fluid inlet 211.

All the other technical specifications and descriptions that relate to the first embodiment apply also to this second embodiment. The present invention also relates to a method for the control of radiators 1, convector heaters or the like for a heating system, wherein the radiator 1 comprises a fluid inlet 211 through which the fluid passes at inlet temperature Tᵢ, a fluid outlet 3, 311 through which the fluid passes at outlet temperature Tₒ and at least a heat exchange portion 8a, 8b, 8c, 8d, 8e at exchange temperature Tₑ warmed by the fluid at exchange temperature Tₑ.

The method comprises the following steps:
1. detection of the fluid flow through the flow inlet 2, 211 and measuring the time interval between the starting time and the ending time of the flow through the flow inlet 2, 211;
2. detection of the inlet temperature Tᵢ and the outlet temperature Tₒ and/or the exchange temperature Tₑ and calculation of the temperature difference of the radiator 1, by using at least one of said detected temperature;
3. calculation of the energy consumption of the radiator (1), by using at least said time interval and said temperature difference.

The temperature difference is, preferably, calculated between the fluid inlet 2, 211 and the fluid outlet 3, 311, using the inlet temperature Tᵢ and the outlet temperature Tₒ. The energy consumption determines the calories consumption preferably based on a flow rate of a boiler connected to the radiator 1 and preferably based on said temperature difference in said time interval.

The incoming temperature Tᵢ and the outgoing temperature Tᵤ are preferably recorded in direct contact with the fluid, or in contact with the radiator 1.

The device and the method according to the present invention may undergo modifications and variants, some of which have been mentioned in the course of the present description.

## Claims

1. Heating system comprising a radiator (1) and a control device (10, 11), wherein said control device comprises a metering device comprising:
- first detection means (12, 112, 13, 113, 18, 118, 22, 122) to detect the fluid flow through a fluid inlet (2, 211) of said radiator (1);
- first measuring means (18, 118, 22, 122) of the time interval between the starting time and the ending time of said flow through said fluid inlet (2, 211), associated to said first detection means (12, 112, 13, 113, 18, 118, 22, 122);
- second detection means to detect the inlet temperature (Tᵢ) at said fluid inlet (2, 211) and the outlet temperature (Tₒ) at a fluid outlet (3, 311) of said radiator (1) and/or an exchange temperature (Tₑ) of an heat exchange portion (8a, 8b, 8c, 8d, 8e) of said radiator (1);
- second measuring means, associated to said second detection means, to calculate the temperature difference between said inlet temperature (Tᵢ) and said outlet temperature (Tₒ) or between said exchange temperature (Tₑ) and at least a comparison temperature, respectively;
- means for the calculation of the energy consumption of said radiator (1), associated to said first (18, 118, 22, 122) and second measuring means, based on said measured time interval and based on said calculated temperature difference.

2. Heating system according to claim 1, **characterized in that** said second detection means detect said exchange temperature (Tₑ); said second measuring means calculate the temperature difference between said exchange temperature (Tₑ) and at least a comparison temperature; said means for calculation of the energy transfer determine the heat consumed based on at least a parameter of said heating system and/or of said radiator and based on said temperature difference in said time interval.

3. Heating system according to one or more of claims 1 or 2, **characterized in that** said control device comprises and/or is associated with control means (6, 61, 7, 711) for fluid inlet (2, 211) able to open it below a threshold temperature and able to close it above said threshold temperature; said first detection means (12, 112, 13, 113, 18, 118, 22, 122) being able to detect the opening of said fluid inlet (2, 211).

4. Heating system according to claim 3, **characterized in that** said control means (6, 61, 7, 711) comprise a thermostatic valve (6) associated with a shutter (7, 711) movable between a closing position and an opening position of said fluid inlet (2, 211); said shutter (7, 711) being associated with a temperature-sensitive element (110, 111) that controls at least the movement for said closing position of said fluid inlet (2, 211) above said threshold temperature; said first detection means (12, 112, 13, 113, 18, 118, 22, 122) comprising a switch (12, 112) associated to a first detection circuit (13, 113), said switch (12, 112) changing its state of opening/closing depending on the position of opening/closing of the shutter (7, 711).

5. Heating system according to claim 4, **characterized in that** said shutter (7, 711) comprises an extension (15, 115) able to change the status of the switch (12, 112) depending on the position of opening/closing of said shutter (7, 711), or **in that** said temperature-sensitive element (110, 111) comprises an appendix (15a) able to change the status of opening/closing of said switch (12, 112) depending on the condition of said temperature-sensitive element (110, 111).

6. Heating system according to claim 5, **characterized in that** said first detection means comprise at least a clock (18, 118), associated with said first detection circuit (13, 113) to define the starting time and the ending time of said flow, and comprise at least a counter (18, 118), to define said time interval between the starting time and the ending time of said flow.

7. Heating system according to one or more of claims from 1 to 6, **characterized in that** said second detection means comprise a thermal probe of inlet (19) and a thermal probe of outlet (20) respectively associated with said inlet (2) and said outlet (3) of said radiator; said thermal probe of inlet (19) and said thermal probe of outlet (20) being associated with a second detection circuit (21) associated with said second measuring means (22).

8. Heating system according to claim 7, **characterized in that** said thermal probe of inlet (19) and/or a thermal probe of outlet (20) are inserted in said radiator in contact with said fluid or are placed in contact with said radiator.

9. Heating system according to one or more of claims from 4 to 8, **characterized in that** said control device comprises an economizer device comprising means to prevent the opening of said inlet (2, 211) at certain times; said means to prevent the opening comprising a slider (30, 130) movable between a rest position and a working position; said slider (30, 130) being associated with a control circuit (31, 131) provided with an input (24, 124) set by a user.

10. Heating system according to claim 11, **characterized in that** said slider (30, 130) in said working position allows said shutter (7, 711) to pass from an opened position to a closed position; said shutter (7, 711) including an extension (32, 132), able to interact with said slider (30, 130) when in a working position; said slider (30, 130) comprising an elastic element (33) deformable by said extension (32, 132) during the transition of said shutter (7, 711) from said opened position to said closed position, said elastic element (33) further defining an obstacle for said shutter (7, 711) to pass from said closed position to said opened position.

11. Heating system according to one or more of claims from 3 to 10, **characterized in that** said metering device is interposed between said radiator and said thermostatic valve (6).

12. Method for the calculation of the energy consumption and/or the energy transfer of radiators (1) for a heating system, being **characterized by** comprising the following steps:
- detection of a fluid flow through a fluid inlet (2, 211) of said radiators (1) and measuring the time interval between the starting time and the ending time of said flow through said fluid inlet (2, 211);
- detection of an inlet temperature (Tᵢ) and an outlet temperature (Tₒ) and/or an exchange temperature (Tₑ) and calculation of the temperature difference between said inlet temperature (Tᵢ) and said outlet temperature (Tₒ) or between said exchange temperature (Tₑ) and at least a comparison temperature;
- calculation of the energy consumption of said radiator (1), by using at least said measured time interval and said calculated temperature difference.

13. Method according to claim 13, **characterized in that** said temperature difference is calculated between said fluid inlet (2) and a fluid outlet (3) of said radiators (1), by using said inlet temperature (Tᵢ) and said outlet temperature (Tₒ); said energy consumption determining the calories consumption based on a flow rate of a boiler connected to said radiator (1) and based on said temperature difference in said time interval.

## Patentansprüche

1. Heizungssystem, umfassend einen Radiator (1) und eine Steuerungsvorrichtung (10, 11), wobei die Steuerungsvorrichtung eine Messvorrichtung umfasst, welche umfasst:
- erste Erfassungsmittel (12, 112, 13, 113, 18, 118, 22, 122) zum Erfassen der Flüssigkeitsströmung durch einen Flüssigkeitseinlass (2, 211) des Radiators (1);
- erste Messmittel (18, 118, 22, 122) für die Zeitspanne zwischen der Startzeit und der Endzeit der Strömung durch den Flüssigkeitseinlass (2, 211), welcher mit den ersten Erfassungsmitteln (12, 112, 13, 113, 18, 118, 22, 122) verbunden ist;
- zweite Erfassungsmittel zum Erfassen der Einlasstemperatur (Tᵢ) an dem Flüssigkeitseinlass (2, 211) und der Auslasstemperatur (Tₒ) an einem Flüssigkeitsauslass (3, 311) des Radiators (1) und/oder einer Austauschtemperatur (Tₑ) eines Wärmeaustauschabschnitts (8a, 8b, 8c, 8d, 8e) des Radiators (1);
- zweite Messmittel, welche mit den zweiten Erfassungsmitteln verbunden sind, zum Berechnen der Temperaturdifferenz zwischen der Einlasstemperatur (Tᵢ) und der Auslasstemperatur (Tₒ) bzw. zwischen der Austauschtemperatur (Tₑ) und zumindest einer Vergleichstemperatur;
- Mittel zum Berechnen des Energieverbrauchs des Radiators (1), welche mit den ersten (18, 118, 22, 122) und zweiten Messmitteln verbunden sind, auf Basis der gemessenen Zeitspanne und auf Basis der berechneten Temperaturdifferenz.

2. Heizungssystem nach Anspruch 1, **dadurch gekennzeichnet, dass** die zweiten Erfassungsmittel die Austauschtemperatur (Tₑ) erfassen; die zweiten Messmittel die Temperaturdifferenz zwischen der Austauschtemperatur (Tₑ) und zumindest einer Vergleichstemperatur berechnen; die Mittel zum Berechnen der Energieübertragung die verbrauchte Wärme auf Basis zumindest eines Parameters des Heizungssystems und/oder des Radiators und auf Basis der Temperaturdifferenz in der Zeitspanne bestimmen.

3. Heizungssystem nach einem oder mehreren der Ansprüche 1 oder 2, **dadurch gekennzeichnet, dass** die Steuerungsvorrichtung umfasst und/oder verbunden ist mit Steuerungsmitteln (6, 61, 7, 711) für Flüssigkeitseinlass (2, 211), welche geeignet sind, diesen unterhalb einer Schwellentemperatur zu öffnen und diesen oberhalb der Schwellentemperatur zu schließen; wobei die Erfassungsmittel (12, 112, 13, 113, 18, 118, 22, 122) geeignet sind, das Öffnen des Flüssigkeitseinlasses (2, 211) zu erfassen.

4. Heizungssystem nach Anspruch 3, **dadurch gekennzeichnet, dass** die Steuerungsmittel (6, 61, 7, 711) ein Thermostatventil (6) umfassen, welches mit einem Verschluss (7, 711) verbunden ist, welcher zwischen einer Verschlussstellung und einer Öffnungsstellung des Flüssigkeitseinlasses (2, 211) bewegbar ist; wobei der Verschluss (7, 711) mit einem temperaturempfindlichen Element (110, 111) verbunden ist, welches zumindest die Bewegung für die Verschlussstellung des Flüssigkeitseinlasses (2, 211) oberhalb der Schwellentemperatur steuert; wobei die ersten Erfassungsmittel (12, 112, 13, 113, 18, 118, 22, 122) einen Schalter (12, 112) umfassen, welcher mit einer ersten Erfassungsschaltung (13, 113) verbunden ist, wobei der Schalter (12, 112) seinen Zustand von Öffnen/Schließen abhängig von der Stellung von Öffnen/Schließen des Verschlusses (7, 711) ändert.

5. Heizungssystem nach Anspruch 4, **dadurch gekennzeichnet, dass** der Verschluss (7, 711) eine Erweiterung (15, 115) umfasst, welche geeignet ist, den Status des Schalters (12, 112) abhängig von der Stellung von Öffnen/Schließen des Verschlusses (7, 711) zu ändern, oder dass das temperaturempfindliche Element (110, 111) einen Fortsatz (15a) umfasst, welcher geeignet ist, den Status von Öffnen/Schließen des Schalters (12, 112) abhängig von dem Zustand des temperaturempfindlichen Elements (110, 111) zu ändern.

6. Heizungssystem nach Anspruch 5, **dadurch gekennzeichnet, dass** die ersten Erfassungsmittel zumindest eine mit der ersten Erfassungsschaltung (13, 113) verbundene Uhr (18, 118) zum Definieren der Startzeit und der Endzeit der Strömung umfassen und zumindest einen Zähler (18, 118) zum Definieren der Zeitspanne zwischen der Startzeit und der Endzeit der Strömung umfassen.

7. Heizungssystem nach einem oder mehreren der Ansprüche von 1 bis 6, **dadurch gekennzeichnet, dass** die zweiten Erfassungsmittel eine Thermosonde des Einlasses (19) und eine Thermosonde des Auslasses (20) umfassen, welche jeweils mit dem Einlass (2) bzw. dem Auslass (3) des Radiators verbunden sind; wobei die Thermosonde des Einlasses (19) und die Thermosonde des Auslasses (20) mit einer zweiten Erfassungsschaltung (21) verbunden sind, welche mit den zweiten Messmitteln (22) verbunden ist.

8. Heizungssystem nach Anspruch 7, **dadurch gekennzeichnet, dass** die Thermosonde des Einlasses (19) und/oder eine Thermosonde des Auslasses (20) in den Radiator in Kontakt mit der Flüssigkeit eingeführt werden oder in Kontakt mit dem Radiator platziert werden.

9. Heizungssystem nach einem oder mehreren Ansprüchen von 4 bis 8, **dadurch gekennzeichnet, dass** die Steuerungsvorrichtung eine Economiservorrichtung umfasst, welche Mittel zum Verhindern des Öffnens des Einlasses (2, 211) zu bestimmten Zeiten umfasst; wobei die Mittel zum Verhindern des Öffnens einen Schieber (30, 130) umfassen, welcher zwischen einer Ruhestellung und einer Arbeitsstellung bewegbar ist; wobei der Schieber (30, 130) mit einer Steuerungsschaltung (31, 131) verbunden ist, für welche ein von einem Benutzer festgelegter Eingang (24, 124) bereitgestellt ist.

10. Heizungssystem nach Anspruch 11, **dadurch gekennzeichnet, dass** der Schieber (30, 130) in der Arbeitsstellung dem Verschluss (7, 711) erlaubt, von einer geöffneten Stellung in eine geschlossene Stellung überzugehen; wobei der Verschluss (7, 711) eine Erweiterung (32, 132) beinhaltet, welche geeignet ist, mit dem Schieber (30, 130) zu interagieren, wenn in einer Arbeitsstellung; wobei der Schieber (30, 130) ein elastisches Element (33) umfasst, welches mittels der Erweiterung (32, 132) während des Übergangs des Verschlusses (7, 711) von der geöffneten Stellung in die geschlossene Stellung deformierbar ist, wobei das elastische Element (33) weiter ein Hindernis für den Verschluss (7, 711) beim Übergang von der geschlossenen Stellung in die geöffnet Stellung definiert.

11. Heizungssystem nach einem oder mehreren der Ansprüche von 3 bis 10, **dadurch gekennzeichnet, dass** die Messvorrichtung zwischen dem Radiator und dem Thermostatventil (6) eingeschoben ist.

12. Verfahren für die Berechnung des Energieverbrauchs und/oder der Energieübertragung von Radiatoren (1) für ein Heizungssystem, welches **dadurch gekennzeichnet ist, dass** es die folgenden Schritte umfasst:
- Erfassen einer Flüssigkeitsströmung durch einen Flüssigkeitseinlass (2, 211) der Radiatoren (1) und Messen der Zeitspanne zwischen der Startzeit und der Endzeit der Strömung durch den Flüssigkeitseinlass (2, 211);
- Erkennen einer Einlasstemperatur (Tᵢ) und einer Auslasstemperatur (Tₒ) und/oder einer Austauschtemperatur (Tₑ) und Berechnen der Temperaturdifferenz zwischen der Einlasstemperatur (Tᵢ) und der Auslasstemperatur (Tₒ) oder zwischen der Austauschtemperatur (Tₑ) und zumindest einer Vergleichstemperatur;
- Berechnen des Energieverbrauchs des Radiators (1) mittels Verwenden zumindest der gemessenen Zeitspanne und der berechneten Temperaturdifferenz.

13. Verfahren nach Anspruch 13, **dadurch gekennzeichnet, dass** die Temperaturdifferenz zwischen dem Flüssigkeitseinlass (2) und einem Flüssigkeitsauslass (3) der Radiatoren (1) berechnet wird, mittels Verwenden der Einlasstemperatur (Tᵢ) und der Auslasstemperatur (Tₒ); wobei der Energieverbrauch den Kalorienverbrauch auf Basis einer Strömungsrate eines an den Radiator (1) angeschlossenen Boilers und auf Basis der Temperaturdifferenz in der Zeitspanne bestimmt.

## Revendications

1. Système de chauffage comprenant un radiateur (1) et un dispositif de commande (10, 11), dans lequel ledit dispositif de commande comprend un dispositif de dosage comprenant :
- un premier moyen de détection (12, 112, 13, 113, 18, 118, 22, 122) pour détecter le flux de fluide à travers une entrée de fluide (2, 211) dudit radiateur (1) ;
- un premier moyen de mesure (18, 118, 22, 122) de l'intervalle de temps entre l'heure de début et l'heure de fin dudit flux à travers ladite entrée de fluide (2, 211), associé audit premier moyen de détection (12, 112, 13, 113, 18, 118, 22, 122) ;
- un second moyen de détection pour détecter la température d'entrée (Tᵢ) au niveau de ladite entrée de fluide (2, 211) et la température de sortie (Tₒ) au niveau d'une sortie de fluide (3, 311) dudit radiateur (1) et/ou une température d'échange (Tₑ) d'une partie échange de chaleur (8a, 8b, 8c, 8d, 8e) dudit radiateur (1) ;
- un second moyen de mesure, associé au second moyen de détection, pour calculer la différence de température entre ladite température d'entrée (Tᵢ) et ladite température de sortie (Tₒ) ou entre ladite température d'échange (Tₑ) et au moins une température de comparaison, respectivement ;
- un moyen pour le calcul de la consommation d'énergie dudit radiateur (1), associé auxdits premier (18, 118, 22, 122) et second moyens de mesure, sur la base dudit intervalle de temps mesurée et sur la base de ladite différence de température calculée.

2. Système de chauffage selon la revendication 1, **caractérisé en ce que** ledit second moyen de détection détecte ladite température d'échange (Tₑ) ; ledit second moyen de mesure calcule la différence de température entre ladite température d'échange (Tₑ) et au moins une température de comparaison ; ledit moyen pour le calcul du transfert d'énergie détermine la chaleur consommée sur la base d'au moins un paramètre dudit système de chauffage et/ou dudit radiateur et sur la base de ladite différence de température dans ledit intervalle de temps.

3. Système de chauffage selon une ou plusieurs des revendications 1 et 2, **caractérisé en ce que** ledit dispositif de commande comprend et/ou est associé à un moyen de commande (6, 61, 7, 711) pour l'entrée de fluide (2, 211) capable de l'ouvrir en dessous d'une température seuil et capable de la fermer au-dessus de ladite température seuil ; ledit premier moyen de détection (12, 112, 13, 113, 18, 118, 22, 122) étant capable de détecter l'ouverture de ladite entrée de fluide (2, 211).

4. Système de chauffage selon la revendication 3, **caractérisé en ce que** ledit moyen de commande (6, 61, 7, 711) comprend une vanne thermostatique (6) associée à un obturateur (7, 711) mobile entre une position de fermeture et une position d'ouverture de ladite entrée de fluide (2, 211) ; ledit obturateur (7, 711) étant associé à un élément thermosensible (110, 111) qui commande au moins le mouvement de ladite position de fermeture de ladite entrée de fluide (2, 211) au-dessus de ladite température seuil ; ledit premier moyen de détection (12, 112, 13, 113, 18, 118, 22, 122) comprenant un commutateur (12, 112) associé à un premier circuit de détection (13, 113), ledit commutateur (12, 112) changeant son état d'ouverture/fermeture selon la position d'ouverture/fermeture de l'obturateur (7, 711).

5. Système de chauffage selon la revendication 4, **caractérisé en ce que** ledit obturateur (7, 711) comprend une extension (15, 115) capable de changer le statut du commutateur (12, 112) selon la position d'ouverture/fermeture dudit obturateur (7, 711), ou **en ce que** ledit élément thermosensible (110, 111) comprend un appendice (15a) capable de changer le statut d'ouverture/fermeture dudit commutateur (12, 112) selon la condition dudit élément thermosensible (110, 111).

6. Système de chauffage selon la revendication 5, **caractérisé en ce que** ledit premier moyen de détection comprend au moins une horloge (18, 118), associée audit premier circuit de détection (13, 113) pour définir l'heure de début et l'heure de fin dudit flux, et comprend au moins un compteur (18, 118) pour définir ledit intervalle de temps entre l'heure de début et l'heure de fin dudit flux.

7. Système de chauffage selon une ou plusieurs des revendications 1 à 6, **caractérisé en ce que** ledit second moyen de détection comprend une sonde thermique d'entrée (19) et une sonde thermique de sortie (20) respectivement associées à ladite entrée (2) et à ladite sortie (3) dudit radiateur ; ladite sonde thermique d'entrée (19) et ladite sonde thermique de sortie (20) étant associées à un second circuit de détection (21) associé audit second moyen de mesure (22).

8. Système de chauffage selon la revendication 7, **caractérisé en ce que** ladite sonde thermique d'entrée (19) et/ou une sonde thermique de sortie (20) sont insérées dans ledit radiateur en contact avec ledit fluide ou sont placées en contact avec ledit radiateur.

9. Système de chauffage selon une ou plusieurs des revendications 4 à 8, **caractérisé en ce que** ledit dispositif de commande comprend un dispositif économiseur comprenant un moyen pour empêcher l'ouverture de ladite entrée (2, 211) à certaines heures ; ledit moyen pour prévenir l'ouverture comprenant un curseur (30, 130) mobile entre une position de repos et une position de travail ; ledit curseur (30, 130) étant associé à un circuit de commande (31, 131) doté d'une entrée (24, 124) définie par un utilisateur.

10. Système de chauffage selon la revendication 11, **caractérisé en ce que** ledit curseur (30, 130) dans ladite position de travail permet audit obturateur (7, 711) de passer d'une position ouverte à une position fermée ; ledit obturateur (7, 711) incluant une extension (32, 132) capable d'interagir avec ledit curseur (30, 130) lorsqu'il est dans la position de travail ; ledit curseur (30, 130) comprenant un élément élastique (33) déformable par ladite extension (32, 132) pendant la transition dudit obturateur (7, 711) entre ladite position ouverte et ladite position fermée, ledit élément élastique (33) définissant en outre un obstacle pour ledit obturateur (7, 711) pour passer de ladite position fermée à ladite position ouverte.

11. Système de chauffage selon une ou plusieurs des revendications 3 à 10, **caractérisé en ce que** ledit dispositif de dosage est interposé entre ledit radiateur et ladite vanne thermostatique (6).

12. Procédé pour le calcul de la consommation d'énergie et/ou du transfert d'énergie de radiateurs (1) pour un système de chauffage, étant **caractérisé en ce qu'**il comprend les étapes suivantes :
- détection d'un flux de fluide à travers une entrée de fluide (2, 211) desdits radiateurs (1) et mesure de l'intervalle de temps entre l'heure de début et l'heure de fin dudit flux à travers ladite entrée de fluide (2, 211) ;
- détection d'une température d'entrée (Tᵢ) et d'une température de sortie (Tₒ) et/ou d'une température d'échange (Tₑ) et calcul de la différence de température entre ladite température d'entrée (Tᵢ) et ladite température de sortie (Tₒ) ou entre ladite température d'échange (Tₑ) et au moins une température de comparaison ;
- calcul de la consommation d'énergie dudit radiateur (1), en utilisant au moins ledit intervalle de temps mesuré et ladite différence de température calculée.

13. Procédé selon la revendication 13, **caractérisé en ce que** ladite différence de température est calculée entre ladite entrée de fluide (2) et une sortie de fluide (3) desdits radiateurs (1), en utilisant ladite température d'entrée (Tᵢ) et ladite température de sortie (Tₒ) ; ladite consommation d'énergie déterminant la consommation de calories sur la base d'un débit d'une chaudière connectée audit radiateur (1) et sur la base de ladite différence de température dans ledit intervalle de temps.
